# EUROPEAN PATENT APPLICATION

(11) **EP 2 963 639 A1**
(43) Date of publication of application: **06.01.2016**
(21) Application number: 14757113.7
(22) Date of filing: 25.02.2014
(51) Int. Cl.: G09G 5/00, H04M 1/00, H04M 1/247

(54) **PORTABLE ELECTRONIC DEVICE, CONTROL METHOD THEREFOR, AND PROGRAM**

(30) Priority: 27.02.2013 JP 2013037506
(71) Applicant: NEC CORPORATION, Tokyo 108-8001 (JP)
(72) Inventor: MAEBARA, Toshiaki, Kawasaki-shi Kanagawa 211-8666 (JP)
(74) Representative: Vossius & Partner Patentanwälte Rechtsanwälte mbB
(86) International application number: PCT/JP2014/054564
(87) International publication number: WO 2014/132965

(57) **Abstract**

There is provided a portable electronic apparatus that can determine a display device to be used desired by a user from among a plurality of display devices without increasing the cost. The portable electronic apparatus includes: a first display device that is arranged on a first casing; a second display device that is arranged on a second casing connected to the first casing; a contact detection unit that detects whether the user has come into contact with the first or second casing; and a control unit that enables the first or second display device on the basis of a detection result obtained by the contact detection unit.

## Description

### TECHNICAL FIELD

### (REFERENCE TO RELATED APPLICATION)

The present invention is based upon and claims the benefit of the priority of Japanese patent application No. 2013-037506, filed on February 27, 2013, the disclosure of which is incorporated herein in its entirety by reference thereto.

The present invention relates to a portable electronic apparatus, a method for controlling the portable electronic apparatus, and a program. In particular, it relates to: a portable electronic apparatus including a plurality of display devices; a method for controlling the portable electronic apparatus; and a program.

### BACKGROUND

Recent years have seen significant advancement in functions of portable electronic apparatuses, such as mobile phones, smartphones, PHSs (Personal Handyphone Systems), and PDAs (Personal Digital Assistants; portable information terminals). As such high-function portable electronic apparatuses, there are portable electronic apparatuses including a plurality of display devices such as liquid crystal panels. Such a portable electronic apparatus includes a plurality of display devices each having a different specification (for example, the size and the resolution of the display area) and selects one of the display devices depending on the situation. For example, depending on the content to be displayed, the portable electronic apparatus selects a display device to be used. More specifically, when displaying a content (for example, a video), which is suitably reproduced by a high-resolution display panel, the portable electronic apparatus selects a high-resolution display device regardless of a disadvantage in terms of power consumption. In contrast, when displaying a content (for example, text information), which does not provide the user with any significant advantage even if the content is reproduced by a high-resolution display panel, the portable electronic apparatus selects a display device that is better in power consumption.

Patent Literature 1 discloses a portable electronic apparatus including two operation surfaces and a technique for selecting one of the operation surfaces depending on the use situation.

### CITATION LIST

### PATENT LITERATURE

Patent Literature 1: Japanese Patent Kokai Publication No. JP2009-267809A

### SUMMARY

### TECHNICAL PROBLEM

The disclosure of the above citation list is incorporated herein by reference thereto. The following analysis has been given by the present inventors.

As described above, there are portable electronic apparatuses each including a plurality of display devices. With such a portable electronic apparatus, it is often the case that a display surface that the user views to operate the portable electronic apparatus is previously determined. Namely, there are apparatuses that do not allow the user to select a display device to operate the portable electronic apparatus.

While there are portable electronic apparatuses that allow the user to select a display device to be used for an operation, the user needs to use a menu or the like when selecting a desired display device to be used. Thus, the user who operates a portable electronic apparatus including a plurality of display devices is forced to perform an operation on a display surface determined by the portable electronic apparatus or the user is requested to perform a complex operation.

The portable electronic apparatus disclosed in Patent Literature 1 has lenses arranged on the respective operation surfaces (display surfaces) to recognize the user's face and receives operations from the operation surface that has acquired a face image. The portable electronic apparatus disclosed in Patent Literature 1 needs to have the lenses on the respective operation surfaces. Namely, for the purpose of determining the operation surface, a plurality of lenses need to be prepared. While portable electronic apparatuses including camera functions have been in widespread use in recent years, only one lens is necessary for causing a portable electronic apparatus to function as an imaging device. A plurality of lens are not necessary. Namely, the portable electronic apparatus disclosed in Patent Literature 1 requires an originally unnecessary lens to determine an operation surface desired by the user, thereby increasing the cost of the portable electronic apparatus.

Thus, there are demanded: a portable electronic apparatus that can determine a display device to be used desired by the user from among a plurality of display devices without increasing the cost; a method for controlling the portable electronic apparatus; and a program.

### SOLUTION TO PROBLEM

According to a first aspect of the present invention, there is provided a portable electronic apparatus, including: a first display device that is arranged on a first casing; a second display device that is arranged on a second casing connected to the first casing; a contact detection unit that detects whether an object has come into contact with the first or second casing; and a control unit that enables the first or second display device on the basis of a detection result obtained by the contact detection unit.

According to a second aspect of the present invention, there is provided a method for controlling a portable electronic apparatus including a first display device that is arranged on a first casing and a second display device that is arranged on a second casing connected to the first casing, the method including: a contact detection step of detecting whether an object has come into contact with the first or second casing; and a device determination step of enabling the first or second display device on the basis of a detection result obtained by the contact detection step.
This method is associated with a certain machine, namely, with the portable electronic apparatus that includes the first and second display devices.

According to a third aspect of the present invention, there is provided a program, causing a computer which controls a portable electronic apparatus including a first display device that is arranged on a first casing and a second display device that is arranged on a second casing connected to the first casing to perform: contact detection processing for detecting whether an object has come into contact with the first or second casing; and device determination processing for enabling the first or second display device on the basis of a detection result obtained by the contact detection processing.
This program can be recorded in a computer-readable storage medium. The storage medium may be a non-transient storage medium such as a semiconductor memory, a hard disk, a magnetic recording medium, or an optical recording medium. The present invention can be embodied as a computer program product.

### ADVANTAGEOUS EFFECTS OF INVENTION

According to the aspects of the present invention, there are provided a portable electronic apparatus that contributes to determining a display device to be used desired by the user from among a plurality of display devices without increasing the cost; a method for controlling the portable electronic apparatus; and a program.

### BRIEF DESCRIPTION OF THE DRAWINGS

Fig. 1 illustrates an outline of an exemplary embodiment.
Fig. 2 illustrates an example of the exterior appearance of a portable electronic apparatus 1 according to a first exemplary embodiment.
Fig. 3 illustrates an exemplary internal configuration of the portable electronic apparatus 1.
Fig. 4 is a flowchart illustrating an exemplary operation of the portable electronic apparatus 1.
Fig. 5 illustrates an example of the exterior appearance of the portable electronic apparatus 1 when seen from a lateral view.
Fig. 6 is a flowchart illustrating an exemplary operation of a portable electronic apparatus 2.
Fig. 7 is a flowchart illustrating an exemplary operation of a portable electronic apparatus 3.
Fig. 8 is a flowchart illustrating another exemplary operation of the portable electronic apparatus 3.

### MODES FOR CARRYING OUT THE INVENTION

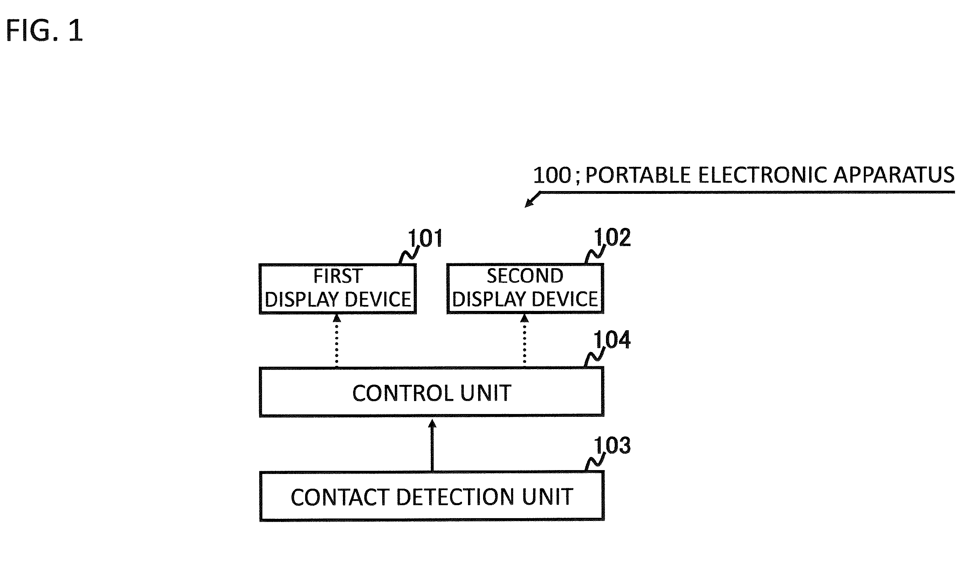

First, an outline of an exemplary embodiment will be described with reference to Fig. 1. In the following outline, various components are denoted by reference characters for the sake of convenience. Namely, the following reference characters are merely used as examples to facilitate understanding of the present invention. The description of the outline does not to intend to set any limitations.

As described above, there is demanded a portable electronic apparatus that can determine a display device to be used desired by the user from among a plurality of display devices without increasing the cost.

Thus, for example, a portable electronic apparatus 100 illustrated in Fig. 1 is provided. The portable electronic apparatus 100 includes a first display device 101 that is arranged on a first casing, a second display device 102 that is arranged on a second casing connected to the first casing, a contact detection unit 103 that detects whether the user has come into contact with the first or second casing; and a control unit 104 that enables the first display device 101 or the second display device 102 on the basis of a detection result obtained by the contact detection unit 103.

The contact detection unit 103 detects whether the user has come into contact with a casing of the portable electronic apparatus 100. Since the contact detection unit 103 can detect whether the user has come into contact with the portable electronic apparatus 100, functions of the contact detection unit 103 can be realized by touch panels. Namely, touch panels are devices necessary for operating the portable electronic apparatus 100. An individual one of the touch panels detects whether the user has come into contact with the portable electronic apparatus 100, and on the basis of the detection result, a display device to be used desired by the user is determined from among a plurality of display devices. Thus, the cost of the portable electronic apparatus 100 is not increased.

Hereinafter, specific embodiments will be described in more detail with reference to the drawings.

### [First exemplary embodiment]

A first exemplary embodiment will be described in more detail with reference to the drawings.

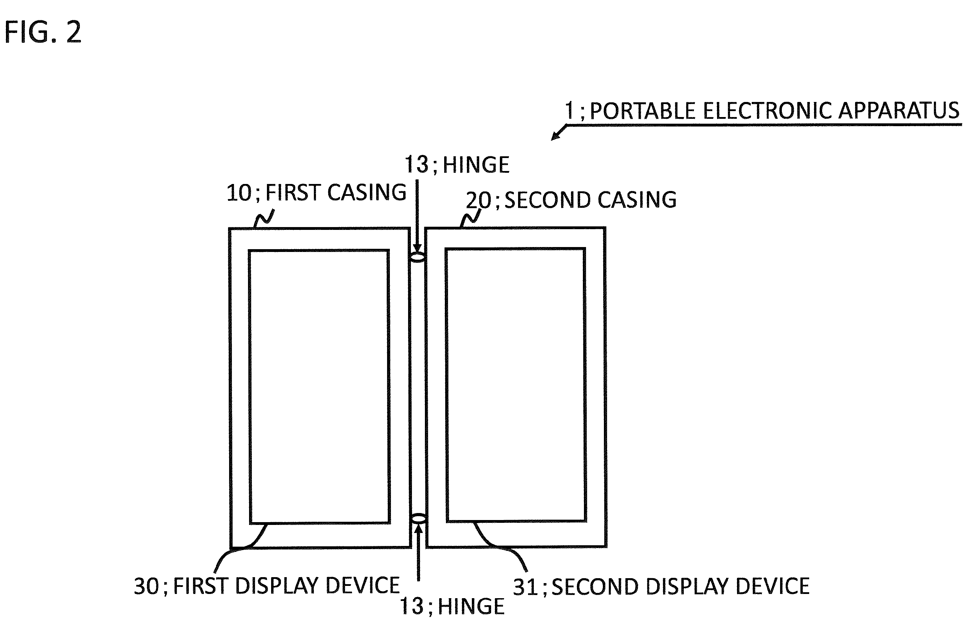

Fig. 2 illustrates an example of the exterior appearance of a portable electronic apparatus 1 according to the present exemplary embodiment.

The portable electronic apparatus 1 includes a first casing 10 and a second casing 20 that are connected by a hinge 13. The first casing 10 and the second casing 20 of the portable electronic apparatus 1 can be folded or opened. Fig. 2 illustrates a state in which the two casings are opened. The first casing 10 and the second casing 20 are provided with a first display device 30 and a second display device 31, respectively.

When the casings of the portable electronic apparatus 1 are opened, the portable electronic apparatus 1 is in one of the following two modes. In a first mode, the user can simultaneously view the first display device 30 and the second display device 31. In a second mode, the back of the first casing 10 and the back of the second casing 20 are into contact with each other. In the second mode, the user cannot simultaneously view the first display device 30 and the second display device 31.

In the present exemplary embodiment, a case in which a display device to be used desired by the user can be determined in the first mode will be described.

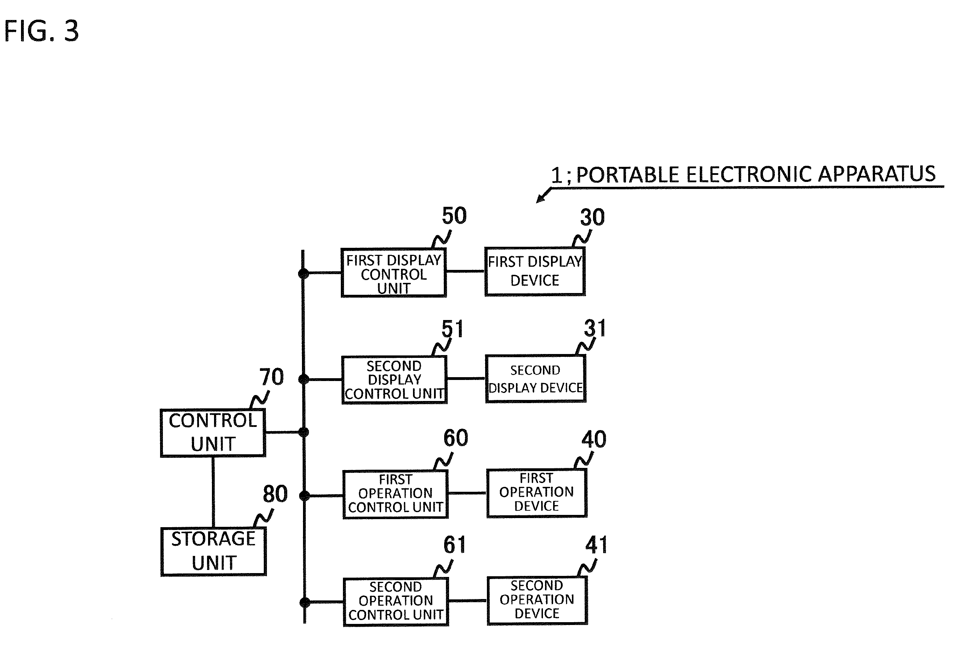

Fig. 3 illustrates an exemplary internal configuration of the portable electronic apparatus 1.

The portable electronic apparatus 3 includes the first display device 30, the second display device 31, a first operation device 40, a second operation device 41, a first display control unit 50, a second display control unit 51, a first operation control unit 60, a second operation control unit 61, a control unit 70, and a storage unit 80. For simplicity, Fig. 3 illustrates only the modules that relate to the portable electronic apparatus 1 according to the present exemplary embodiment.

For example, the first display device 30 is a liquid crystal panel or the like and provides the user who operates the portable electronic apparatus 1 with information. The first display control unit 50 is a driver for the first display device 30 and drives the first display device 30 in accordance with instructions from the control unit 70. The functions of the second display device 31 and the second display control unit 51 are the same as those of the first display device 30 and the first display control unit 50.

For example, the first operation device 40 is a touch panel or the like and receives operations that relate to the portable electronic apparatus 1 from the user. The first operation control unit 60 is a driver for the first operation device 40 and outputs information that relates to operations of the user to the control unit 70. The functions of the second operation device 41 and the second operation control unit 61 are the same as those of the first operation device 40 and the first operation control unit 60. The first operation device 40, the first operation control unit 60, the second operation device 41, and the second operation control unit 61 correspond to the above contact detection unit 103.

The control unit 70 controls each of the units illustrated in Fig. 3 and comprehensively controls the portable electronic apparatus 1. On the basis of the information obtained from the first operation control unit 60 or the second operation control unit 61, the control unit 70 determines a display device used when the user operates the portable electronic apparatus 1. Namely, on the basis of the information obtained from the first operation control unit 60 or the second operation control unit 61, the control unit 70 determines which one of the first display device 30 and the second display device 31 needs to be enabled.

For example, the control unit 70 can be realized by a CPU (Central Processing Unit). In addition, the control unit 70 can be realized by a computer program that causes a computer included in the portable electronic apparatus 1 to perform processing, which will be described in detail below, of the control unit 70 by using hardware of the computer.

For example, the storage unit 80 stores data necessary for operations of the portable electronic apparatus 1 and programs performed by the CPU.

Next, an operation of the portable electronic apparatus 1 will be described.

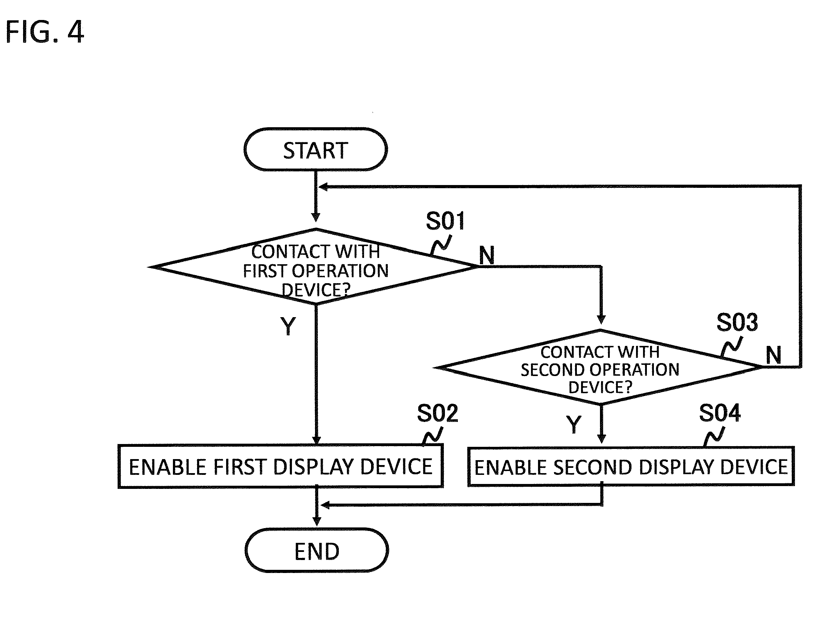

Fig. 4 is a flowchart illustrating an exemplary operation of the portable electronic apparatus 1.

In step S01, the control unit 70 determines whether the user has come into contact with the first operation device 40. If the user has come into contact with the first operation device 40 (Yes in step S01), the control unit 70 enables the first display device 30 (step S02).

If the user has not come into contact with the first operation device 40 (No in step S01), the control unit 70 determines whether the user has come into contact with the second operation device 41 (step S03). If the user has come into contact with the second operation device 41 (Yes in step S03), the control unit 70 enables the second display device 31 (step S04).

If the user has not come into contact with the second operation device 41 (No in step S03), the processing returns to step S01.

In this way, the portable electronic apparatus 1 according to the present exemplary embodiment determines a display device to be enabled on the basis of the result of the determination of whether the user has come into contact with the first operation device 40 or the second operation device 41.

### [Second exemplary embodiment]

Next, a second exemplary embodiment will be described in detail with reference to the drawings.

The portable electronic apparatus 1 according to the first exemplary embodiment determines a display device to be enabled on the basis of the result of the determination of whether the user has come into contact with the first operation device 40 or the second operation device 41. The portable electronic apparatus 1 does not set any limitations on the number of fingers that have come into contact with an operation device. However, the portable electronic apparatus 1 has been described on the assumption of a normal case in which a single finger (a single object) has come into contact with a display device.

Namely, this is because a case in which the user holds the first casing 10 with his/her left hand and touches the second display device 31 with his/her right hand can be considered as a normal operation when the user uses the portable electronic apparatus 1 in the first mode in Fig. 2 (in a state in which the user can simultaneously view the first casing 10 and the second casing 20).

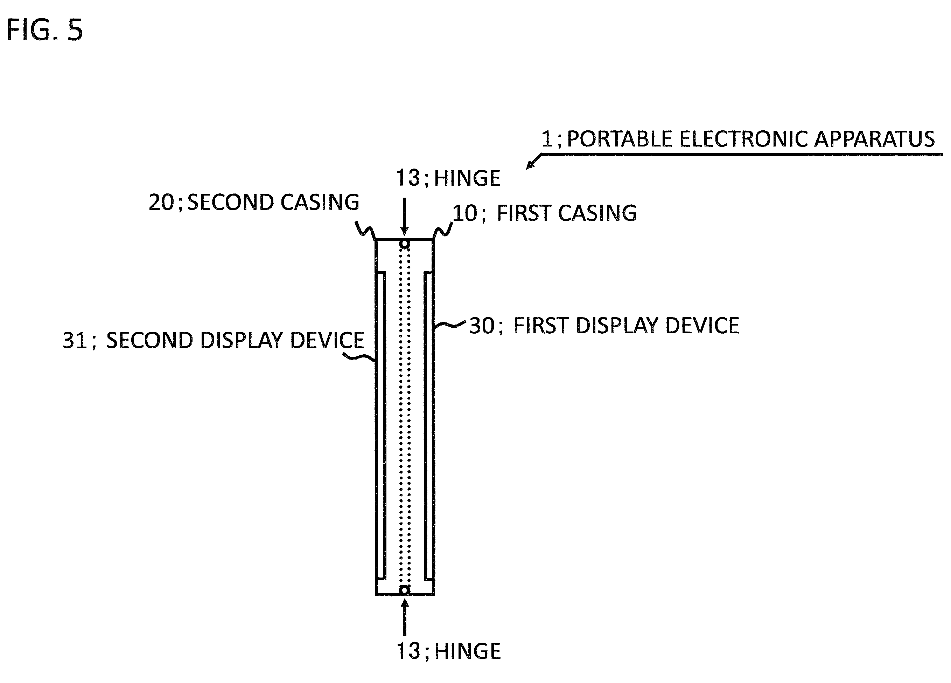

Fig. 5 illustrates an example of the exterior appearance of the portable electronic apparatus 1 when seen from a lateral view. This state illustrated in Fig. 5 corresponds to the above second mode.

The present exemplary embodiment describes how a display device is determined when the user operates the portable electronic apparatus 1 in the second mode in which the back of the first casing 10 and the back of the second casing 20 are into contact with each other.

In the second mode as illustrated in Fig. 5, it is often the case that fingers of the user are into contact with a display device (operation device) located on the back of a display device being viewed by the user. More specifically, it is often the case that, when the user operates the portable electronic apparatus 1 as illustrated in Fig. 5, a plurality of fingers are into contact with an operation device different from an operation device with which a finger is into contact.

Thus, a portable electronic apparatus 2 according to the present exemplary embodiment detects whether a plurality of fingers (a plurality of objects) have come into contact with an operation device and determines a display device to be enabled on the basis of the detection result. In the following description, an operation in which a plurality of fingers have come into contact with an operation device will be referred to as a multipoint contact. In addition, since the overall and internal configurations of the portable electronic apparatus 2 are the same as those described with reference to Figs. 2 and 3, further descriptions of the configurations will be omitted.

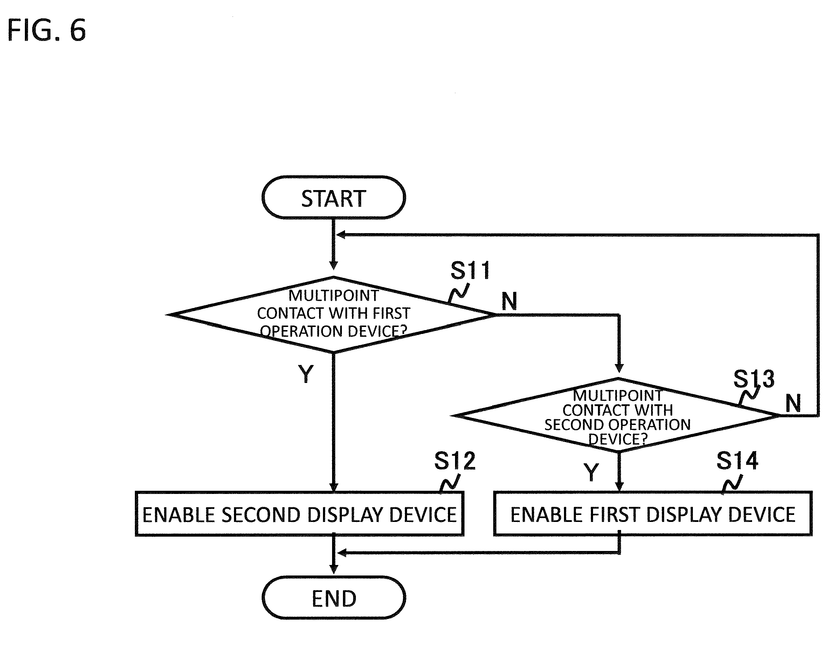

Fig. 6 is a flowchart illustrating an exemplary operation of a portable electronic apparatus 2.

In step S11, the control unit 70 determines whether the user has performed a multipoint contact with the first operation device 40. If the user has performed a multipoint contact with the first operation device 40 (Yes in step S11), the control unit 70 enables the second display device 31 (step S12).

If the user has not performed a multipoint contact with the first operation device 40 (No in step S11), the control unit 70 determines whether the user has performed a multipoint contact with the second operation device 41 (step S13). If the user has performed a multipoint contact with the second operation device 41 (Yes in step S13), the control unit 70 enables the first display device 30 (step S14).

If the user has not performed a multipoint contact with the second operation device 41 (No in step S13), the processing returns to step S11.

In this way, the portable electronic apparatus 2 according to the present exemplary embodiment determines a display device to be enabled on the basis of the result of the determination of whether the user has performed a multipoint contact with the first operation device 40 or the second operation device 41. Namely, when an operation device detects a multipoint contact, it is conceivable that the user is operating the portable electronic apparatus 2 in the second mode illustrated in Fig. 5. Thus, in such case, the control unit 70 enables a display device located on the side different from the side on which the operation device has detected the multipoint contact.

### [Third exemplary embodiment]

Next, a third exemplary embodiment will be described in detail with reference to the drawings.

In the first and second exemplary embodiments, how a display device to be enabled is determined has been described. However, as in the portable electronic apparatus 1, if a plurality of operation devices exist, it is also necessary to determine an operation device to be enabled. Thus, a portable electronic apparatus 3 according to the present exemplary embodiment determines an operation device to be enabled on the basis of the result of a contact with an operation device. Since the overall and internal configurations of the portable electronic apparatus 3 are the same as those described with reference to Figs. 2 and 3, further descriptions of the configurations will be omitted.

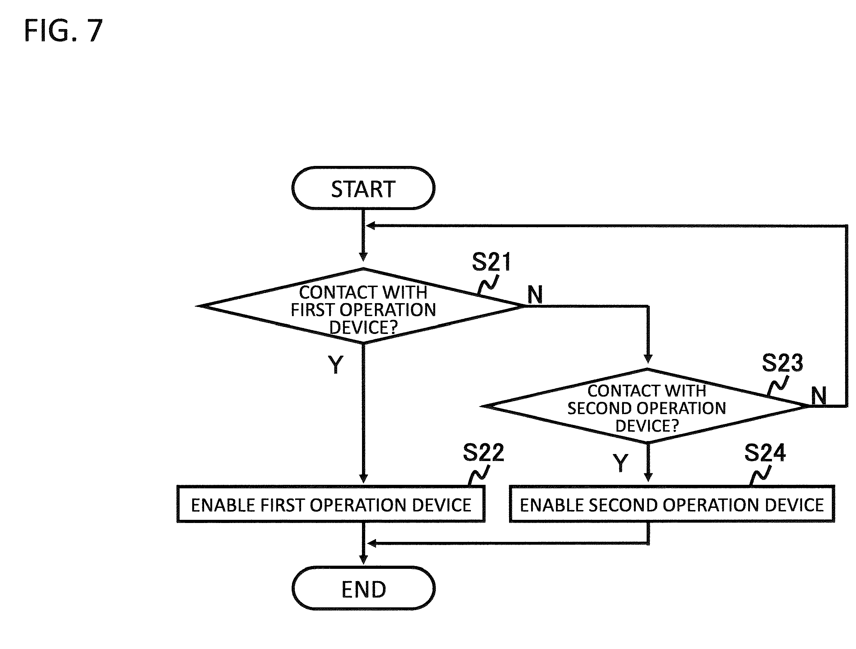

Fig. 7 is a flowchart illustrating an exemplary operation of the portable electronic apparatus 3. As illustrated in Fig. 7, the portable electronic apparatus 3 enables an operation device located on the side with which the user has come into contact. For example, if the user has come into contact with the first operation device 40 (Yes in step S21), the portable electronic apparatus 3 enables the first operation device 40.

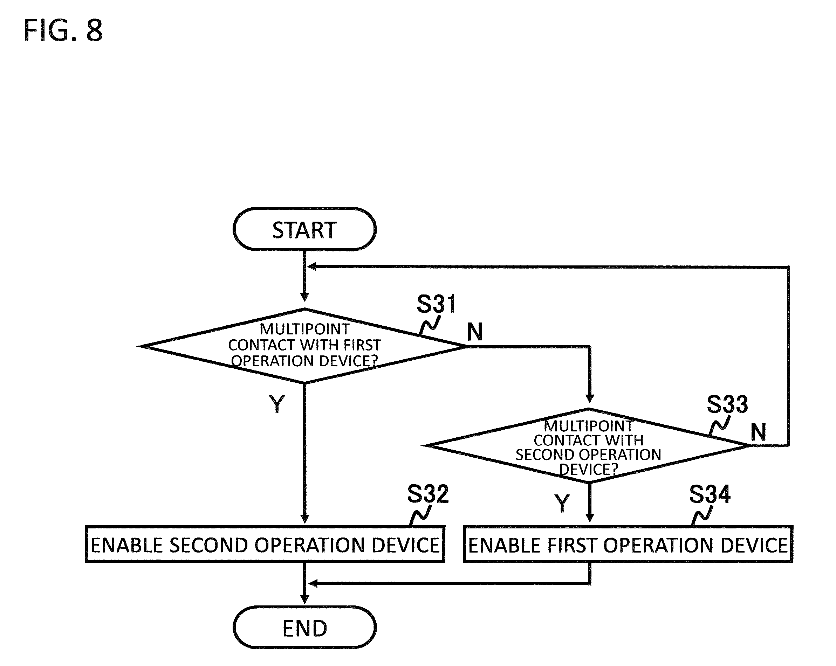

Fig. 8 is a flowchart illustrating another exemplary operation of the portable electronic apparatus 3. Alternatively, as described in the second exemplary embodiment, the portable electronic apparatus 3 may enable an operation device located on the side different from the side on which a multipoint contact has been detected.

In this way, the portable electronic apparatus 3 according to the present exemplary embodiment determines an operation device to be enabled on the basis of the result of the determination of whether the user has come into contact with the first operation device 40 or the second operation device 41.

In the above first to third exemplary embodiments, a portable electronic apparatus that determines a display device or an operation device to be enabled on the basis of a contact with an operation device has been described. However, a display device or the like to be enabled may be determined by an image recognition technique or an orientation detection technique, other than on the basis of a contact with an operation device. For example, if a portable electronic apparatus includes a camera function, a display device or an operation device that has recognized a human face may be enabled.

Alternatively, if the portable electronic apparatus includes an angular velocity sensor or the like and can detect an orientation of the portable electronic apparatus, a display device or an operation device that faces in the direction opposite to the direction of gravitational force may be enabled.

In addition, while the operation devices (for example, touch panels) are used for detecting a contact with a finger(s) of the user in the first to third exemplary embodiments, another device for detecting a finger(s) of the user may be arranged separately from (independently of) the operation devices. More specifically, each of the first casing 10 and the second casing 20 may be provided with a contact sensor (an electrostatic sensor, a pressure sensor, etc.) or a hardware key, and the portable electronic apparatus may detect a contact of a finger(s) of the user on the basis of information obtained from these sensors or keys.

In addition, for example, an operation device and a contact sensor may be used together to detect a contact of a finger(s) of the user. For example, the first operation device 40 may be used to detect a contact(s) with the first display device 30, and a contact sensor may be used to detect a contact with the second display device 31.

In addition, in the first to third exemplary embodiments, an operation device is arranged for each of the display devices. However, the present invention is not limited to such mode. For example, while the first operation device 40 is arranged, the second operation device 41 does not need to be arranged. In such case, it is not necessary to determine an operation device to be enabled. However, it is necessary to determine a display device to be enabled. Thus, a display device to be enabled is determined in accordance with the method described in the first or second exemplary embodiment.

The above exemplary embodiments can partially or entirely be described but not limited to as follows.

### [Mode 1]

See the portable electronic apparatus according to the above first aspect.

### [Mode 2]

The portable electronic apparatus according to mode 1;
wherein, when the contact detection unit detects that a single object has come into contact with the first casing, the control unit enables the first display device.

### [Mode 3]

The portable electronic apparatus according to mode 1 or 2;
wherein, when the contact detection unit detects that a plurality of objects have come into contact with the first casing, the control unit enables the second display device.

### [Mode 4]

The portable electronic apparatus according to any one of modes 1 to 3, comprising:
a first operation device that is arranged on the first casing; and
a second operation device that is arranged on the second casing; wherein the control unit enables the first or second operation device on the basis of a detection result obtained by the contact detection unit.

### [Mode 5]

The portable electronic apparatus according to mode 4;
wherein, when the contact detection unit detects that a single object has come into contact with the first casing, the control unit enables the first operation device.

### [Mode 6]

The portable electronic apparatus according to mode 4 or 5;
wherein, when the contact detection unit detects that a plurality of objects have come into contact with the first casing, the control unit enables the second operation device.

### [Mode 7]

The portable electronic apparatus according to any one of modes 1 to 6; wherein the first and second casings are connected with each other by a hinge; and
wherein the first and second casings form a first mode in which both of the first and second display devices are viewed by a user and a second mode in which one of the first and second display devices is viewed by a user.

### [Mode 8]

The portable electronic apparatus according to mode 7;
wherein, when the first and second casings form the first mode, if the contact detection unit detects that a single object has come into contact with one of the casings, the control unit enables a display device or an operation device that is arranged on the contacted casing; and
wherein, when the first and second casings form the second mode, if the contact detection unit detects that a plurality of objects have come into contact with one of the casings, the control unit enables a display device or an operation device that is arranged on a casing different from the contacted casing.

### [Mode 9]

See the method for controlling a portable electronic apparatus according to the above second aspect.

### [Mode 10]

The method for controlling a portable electronic apparatus according to mode 9;
wherein, when a contact of a single object with the first casing is detected in the contact detection step, the first display device is enabled in the device determination step.

### [Mode 11]

The method for controlling a portable electronic apparatus according to mode 9 or 10;
wherein, when a contact of a plurality of objects with the first casing is detected in the contact detection step, the second display device is enabled in the device determination step.

### [Mode 12]

See the program according to the above third aspect.

### [Mode 13]

The program according to mode 12;
wherein, when a contact of a single object with the first casing is detected in the contact detection processing, the first display device is enabled in the device determination processing.

### [Mode 14]

The program according to mode 12 or 13;
wherein, when a contact of a plurality of objects with the first casing is detected in the contact detection processing, the second display device is enabled in the device determination processing.

The disclosure of the above Patent Literature is incorporated herein by reference thereto. Modifications and adjustments of the exemplary embodiments and the examples are possible within the scope of the overall disclosure (including the claims) of the present invention and based on the basic technical concept of the present invention. In addition, various combinations and selections of various disclosed elements (including the elements in each of the claims, exemplary embodiments, examples, drawings, etc.) are possible within the scope of the claims of the present invention. Namely, the present invention of course includes various variations and modifications that could be made by those skilled in the art according to the overall disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

### REFERENCE SIGNS LIST

- 1 to 3: portable electronic apparatus
- 10: first casing
- 13: hinge
- 20: second casing
- 30, 101: first display device
- 31: second display device
- 40: first operation device
- 41, 102: second operation device
- 50: first display control unit
- 51: second display control unit
- 60: first operation control unit
- 61: second operation control unit
- 70, 104: control unit
- 80: storage unit
- 103: contact detection unit

## Claims

1. A portable electronic apparatus, comprising:
a first display device that is arranged on a first casing;
a second display device that is arranged on a second casing connected to the first casing;
a contact detection unit that detects whether an object has come into contact with the first or second casing; and
a control unit that enables the first or second display device on the basis of a detection result obtained by the contact detection unit.

2. The portable electronic apparatus according to claim 1;
wherein, when the contact detection unit detects that a single object has come into contact with the first casing, the control unit enables the first display device.

3. The portable electronic apparatus according to claim 1 or 2;
wherein, when the contact detection unit detects that a plurality of objects have come into contact with the first casing, the control unit enables the second display device.

4. The portable electronic apparatus according to any one of claims 1 to 3, comprising:
a first operation device that is arranged on the first casing; and
a second operation device that is arranged on the second casing;
wherein the control unit enables the first or second operation device on the basis of a detection result obtained by the contact detection unit.

5. The portable electronic apparatus according to claim 4;
wherein, when the contact detection unit detects that a single object has come into contact with the first casing, the control unit enables the first operation device.

6. The portable electronic apparatus according to claim 4 or 5;
wherein, when the contact detection unit detects that a plurality of objects have come into contact with the first casing, the control unit enables the second operation device.

7. The portable electronic apparatus according to any one of claims 1 to 6;
wherein the first and second casings are connected with each other by a hinge; and
wherein the first and second casings form a first mode in which both of the first and second display devices are viewed by a user and a second mode in which one of the first and second display devices is viewed by a user.

8. The portable electronic apparatus according to claim 7;
wherein, when the first and second casings form the first mode, if the contact detection unit detects that a single object has come into contact with one of the casings, the control unit enables a display device or an operation device that is arranged on the contacted casing; and
wherein, when the first and second casings form the second mode, if the contact detection unit detects that a plurality of objects have come into contact with one of the casings, the control unit enables a display device or an operation device that is arranged on a casing different from the contacted casing.

9. A method for controlling a portable electronic apparatus including a first display device that is arranged on a first casing and a second display device that is arranged on a second casing connected to the first casing, the method comprising:
a contact detection step of detecting whether an object has come into contact with the first or second casing; and
a device determination step of enabling the first or second display device on the basis of a detection result obtained by the contact detection step.

10. A program, causing a computer which controls a portable electronic apparatus including a first display device that is arranged on a first casing and a second display device that is arranged on a second casing connected to the first casing to perform:
contact detection processing for detecting whether an object has come into contact with the first or second casing; and
device determination processing for enabling the first or second display device on the basis of a detection result obtained by the contact detection processing.
